# EUROPÄISCHE PATENTANMELDUNG

(11) **EP 3 132 846 A1**
(43) Veröffentlichungstag der Anmeldung: **22.02.2017**
(21) Anmeldenummer: 15002457.8
(22) Anmeldetag: 18.08.2015
(51) Int. Cl.: B01J 8/00, B65D 90/54

(54) **ANORDNUNG ZUM AUSTAUSCHEN EINES IN EINEM REAKTORBEHÄLTER EINES REAKTORS AUFGENOMMENEN KATALYSATORS UND REAKTOR MIT EINER DEARTIGEN ANORDNUNG**

(71) Anmelder: Linde Aktiengesellschaft, 80331 München (DE)
(72) Erfinder: CONRAD, Joachim, 09221 Neukirchen (DE)
(74) Vertreter: Imhof, Dietmar

(57) **Zusammenfassung**

Eine Anordnung (10) zum Austauschen eines in einem Reaktorbehälter (2) eines Reaktors (1) zur Oxidation eines Synthesegases (S) aufgenommenen Katalysators (3), mit einem an dem Reaktorbehälter (2) anordenbaren rohrförmigen Flanschabschnitt (11), durch den der Katalysator (3) aus dem Reaktorbehälter (2) entnehmbar ist, einem Deckel (14) zum Verschließen des Flanschabschnitts (11) und einer Verschlusseinrichtung (13), die gleichzeitig den Deckel (14) und den Flanschabschnitt (11) umfänglich umgreift und die dazu eingerichtet ist, den Deckel (14) in einer Axialrichtung (A) des Flanschabschnitts (11) gegen diesen zu pressen.

## Beschreibung

Die Erfindung betrifft eine Anordnung zum Austauschen eines in einem Reaktorbehälter eines Reaktors zur Oxidation eines Synthesegases aufgenommenen Katalysators und einen Reaktor zur Oxidation eines Synthesegases mit einer derartigen Anordnung.

Bei der verfahrenstechnischen Herstellung von Wasserstoff, insbesondere bei der sogenannten partiellen Oxidation, wird ein Rohstoff, wie Erdgas oder ein schwerer Kohlenwasserstoff, beispielsweise Heizöl, unter Sauerstoffmangel in einem exothermen Prozess umgesetzt. Um unerwünschte Begleitstoffe wie Schwefelwasserstoff, Nickel oder Schwefel aus einem durch einen verfahrenstechnischen Reaktor strömenden Synthesegas zu entfernen, umfasst der Reaktor einen Katalysator, der als Schüttgut in den Reaktor eingebracht ist. Zum Entfernen und/oder Austauschen des Katalysators kann beispielsweise eine Anordnung in Form einer Düse oder Luftblaslanze eingesetzt werden, mit deren Hilfe der Katalysator aus dem Reaktor ausblasbar ist. Die US 6,182,716 B1 und die US 5,222,533 A beschreiben derartige Anordnungen. Die Düse oder Luftblaslanze wird hierzu durch einen verschraubten Anschlussflansch in den Reaktor eingeführt. Alternativ kann, wie in der US 5,840,260 A beschrieben, der Katalysator aus dem Reaktor abgesaugt werden.

Vor diesem Hintergrund besteht die Aufgabe der vorliegenden Erfindung darin, eine verbesserte Anordnung zum Austauschen eines Katalysators zur Verfügung zu stellen.

Demgemäß wird eine Anordnung zum Austauschen eines in einem Reaktorbehälter eines Reaktors zur Oxidation eines Synthesegases aufgenommenen Katalysators vorgeschlagen. Die Anordnung umfasst einen an dem Reaktorbehälter anordenbaren rohrförmigen Flanschabschnitt, durch den der Katalysator aus dem Reaktorbehälter entnehmbar ist, einen Deckel zum Verschließen des Flanschabschnitts und eine Verschlusseinrichtung, die gleichzeitig den Deckel und den Flanschabschnitt umfänglich umgreift und die dazu eingerichtet ist, den Deckel in einer Axialrichtung des Flanschabschnitts gegen diesen zu pressen.

Mit Hilfe der Verschlusseinrichtung ist es in Vergleich zu einer Anordnung mit einem verschraubten Deckel möglich, den Katalysator schnell und komfortabel auszutauschen. Vorzugsweise ist die Verschlusseinrichtung seitlich auf den Deckel und den Flanschabschnitt aufgeklemmt. Die Verschlusseinrichtung ist vorzugweise ein Schnellverschluss, der ohne zusätzliche Werkzeuge öffenbar ist. Der Katalysator umfasst vorzugsweise eine Vielzahl an Katalysatorelementen, die als Schüttgut in den Reaktorbehälter eingebracht sind. Vorzugsweise sind die Katalysatorelemente kugelförmig, so dass sie bei geöffnetem Deckel aus dem Flanschabschnitt herausrieseln. Die Katalysatorelemente sind vorzugsweise aus einem pyrophoren Material gefertigt. Als pyrophor werden chemische Stoffe bezeichnet, die fein verteilt schon bei Raumtemperatur und an der Luft heftig mit Sauerstoff reagieren. Der Katalysator ist vorzugsweise auf kugelförmigen Stützelementen angeordnet, die ebenfalls als Schüttgut in den Reaktorbehälter eingebracht sein können. Vorzugsweise ist der Flanschabschnitt ebenfalls mit Stützelementen gefüllt. Die Stützelemente sind vorzugsweise chemisch inert. Der Reaktor kann auch als Reformer bezeichnet werden. Vorzugsweise ist der Reaktor zur partiellen Oxidation des Synthesegases geeignet. Die Anordnung kann den Reaktorbehälter umfassen.

Gemäß einer Ausführungsform umfasst der Deckel eine umlaufende Rippe, die dazu eingerichtet ist, formschlüssig in eine an einem Endabschnitt des Flanschabschnitts vorgesehene Nut einzugreifen.

Die Rippe kann einen rechteckigen Querschnitt aufweisen. Vorzugsweise verspannt sich bei der Beaufschlagung des Reaktorbehälters mit Synthesegas die Rippe druckbedingt in der Nut, wodurch eine besonders gute Dichtwirkung erreicht wird. Die Rippe ist vorzugsweise materialeinstückig mit dem Deckel ausgebildet.

Gemäß einer weiteren Ausführungsform ist zwischen der Rippe und der Nut zumindest ein Dichtelement vorgesehen.

Vorzugsweise sind zwischen der Rippe und der Nut zwei Dichtelemente vorgesehen. Die Dichtelemente sind vorzugsweise Rundringdichtungen. Insbesondere sind in der Rippe Nuten vorgesehen, in denen die Dichtelemente aufgenommen sind.

Gemäß einer weiteren Ausführungsform ist zwischen einer Stirnfläche des Endabschnitts und einer Vorderseite des Deckels eine Dichtscheibe vorgesehen.

Die Dichtscheibe kann aus Edelstahl oder Graphit gefertigt sein.

Gemäß einer weiteren Ausführungsform ist in dem Deckel eine Bohrung vorgesehen, in der ein zwischen dem zumindest einen Dichtelement und der Dichtscheibe herrschender Gasdruck ermittelbar ist.

An der Bohrung kann ein Drucksensor angeschlossen werden. Mit Hilfe des Drucksensors kann ermittelt werden, ob das Dichtelement oder die Dichtscheibe undicht ist.

Gemäß einer weiteren Ausführungsform ist die Verschlusseinrichtung umfänglich in mindestens zwei Segmente unterteilt, die an einem Gelenk verschwenkbar miteinander verbunden sind.

Vorzugsweise ist die Verschlusseinrichtung in genau zwei halbkreisförmige Segmente unterteilt.

Gemäß einer weiteren Ausführungsform sind die Segmente mit Hilfe eines Verbindungselements vorspannbar.

Das Verbindungselement ist vorzugsweise eine Schraube. Mit Hilfe des Verbindungselements sind die Segmente seitlich auf den Deckel und den Endabschnitt des Flanschabschnitts aufklemmbar.

Gemäß einer weiteren Ausführungsform weisen die Segmente schräg positionierte Dichtflächen auf, die dazu eingerichtet sind, beim Vorspannen der Segmente auf einer korrespondierenden Dichtfläche des Endabschnitts und einer korrespondierenden Dichtfläche des Deckels abzugleiten, um den Deckel in der Axialrichtung des Flanschabschnitts gegen diesen zu pressen.

Hierdurch wird der Deckel beim seitlichen Aufpressen der Segmente auf den Deckel und den Endabschnitt axial auf den Flanschabschnitt gepresst, wodurch eine gute Dichtwirkung erzielt wird.

Gemäß einer weiteren Ausführungsform weist der Deckel einen Stopfen, der in den Flanschabschnitt einführbar ist, und ein elastisches Element, insbesondere einen Faltenbalg, auf, das zwischen einer Vorderseite des Deckels und dem Stopfen angeordnet ist.

Mit Hilfe des elastischen Elements kann der Stopfen gegenüber den in dem Flanschabschnitt aufgenommenen Stützelementen federvorgespannt werden.

Gemäß einer weiteren Ausführungsform ist der Stopfen mit einem Gewebe, insbesondere einem Keramikgewebe, gefüllt.

Hierdurch ist der Stopfen besonders temperaturbeständig.

Gemäß einer weiteren Ausführungsform weist der Stopfen ein ringförmiges Dichtelement zum umfänglichen Abdichten des Stopfens gegenüber dem Flanschabschnitt auf.

Das ringförmige Dichtelement ist vorzugsweise aus Edelstahl oder Graphit gefertigt.

Gemäß einer weiteren Ausführungsform ist senkrecht zu einer Axialrichtung des Flanschabschnitts an diesem ein Rohr zum Befüllen des Flanschabschnitts mit einem Schutzgas vorgesehen.

Hierdurch kann eine Oxidation des Katalysators beim Entfernen desselben aus dem Reaktorbehälter verhindert werden.

Gemäß einer weiteren Ausführungsform umfasst die Anordnung ferner einen Behälter zum Aufnehmen des Katalysators, wobei der Behälter an den Flanschabschnitt anschließbar ist.

Der Behälter ist dazu eingerichtet, den Katalysator in Form der Katalysatorelemente aufzunehmen. Vorzugsweise ist der Behälter mit einem Schutzgas wie Stickstoff gefüllt.

Gemäß einer weiteren Ausführungsform ist der Behälter mit Hilfe einer gasdichten Schutzhülle mit dem Behälter verbindbar.

Die Schutzhülle kann eine verformbare oder flexible Plane sein. Vorzugsweise ist die Schutzhülle hitzebeständig. Die Schutzhülle kann mit Hilfe einer Fixiereinrichtung, beispielsweise einer ringförmigen Klemme, an dem Flanschabschnitt befestigt sein.

Ferner wird ein Reaktor zur Oxidation eines Synthesegases vorgeschlagen. Der Reaktor umfasst einen Reaktorbehälter, einen in dem Reaktorbehälter aufgenommenen Katalysator und eine derartige Anordnung zum Entnehmen des Katalysators aus dem Reaktorbehälter.

Der Reaktor ist insbesondere für verfahrenstechnische Anlagen zur Wasserstoffherstellung geeignet. Vorzugsweise ist der Reaktor zur partiellen Oxidation des Synthesegases geeignet. Insbesondere wird das Synthesegas durch den Reaktor hindurchgeleitet. Mit Hilfe des Katalysators können unerwünschte Begleitstoffe wie Schwefelwasserstoff, Nickel oder Schwefel aus dem Synthesegas entfernt werden. Vorzugsweise weist der Katalysator eine Vielzahl kugelförmiger Katalysatorelemente auf, die als Schüttgut in den Behälter eingebracht werden können.

Weitere mögliche Implementierungen der Anordnung und/oder des Reaktors umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zur jeweiligen Grundform der Anordnung und/oder des Reaktors hinzufügen.

Weitere vorteilhafte Ausgestaltungen und Aspekte der Anordnung und/oder des Reaktors sind Gegenstand der Unteransprüche sowie der im Folgenden beschriebenen Ausführungsbeispiele der Anordnung und/oder des Reaktors. Im Weiteren werden die Anordnung und/oder der Reaktor unter Bezugnahme auf die beigelegten Figuren näher erläutert.
Fig. 1 zeigt eine schematische Schnittansicht einer Ausführungsform eines Reaktors einer verfahrenstechnischen Anlage zur Wasserstoffherstellung;
Fig. 2 zeigt eine Schnittansicht einer Ausführungsform einer Verschlusseinrichtung einer Anordnung zum Austauschen eines in einem Reaktorbehälter des Reaktors gemäß Fig. 1 aufgenommenen Katalysators in der Detailansicht B gemäß der Fig. 1;
Fig. 3 zeigt die Verschlusseinrichtung gemäß Fig. 2 in der Detailansicht C gemäß Fig. 2;
Fig. 4 zeigt eine Weiterbildung der Verschlusseinrichtung gemäß Fig. 2 in der Detailansicht C gemäß Fig. 2;
Fig. 5 zeigt die Verschlusseinrichtung gemäß Fig. 2 im Betrieb des Reaktors in der Detailansicht C gemäß Fig. 2;
Fig. 6 zeigt eine vergrößerte Teilansicht der Fig. 5;
Fig. 7 zeigt die Verschlusseinrichtung gemäß Fig. 2 in der Detailansicht D gemäß Fig. 2;
Fig. 8 zeigt die Verschlusseinrichtung gemäß Fig. 2 in der Detailansicht E gemäß Fig. 1; und
Fig. 9 zeigt eine schematische Schnittansicht einer weiteren Ausführungsform eines Reaktors einer verfahrenstechnischen Anlage zur Wasserstoffherstellung.

In den Figuren sind gleiche oder funktionsgleiche Elemente mit denselben Bezugszeichen versehen worden, sofern nichts anderes angegeben ist.

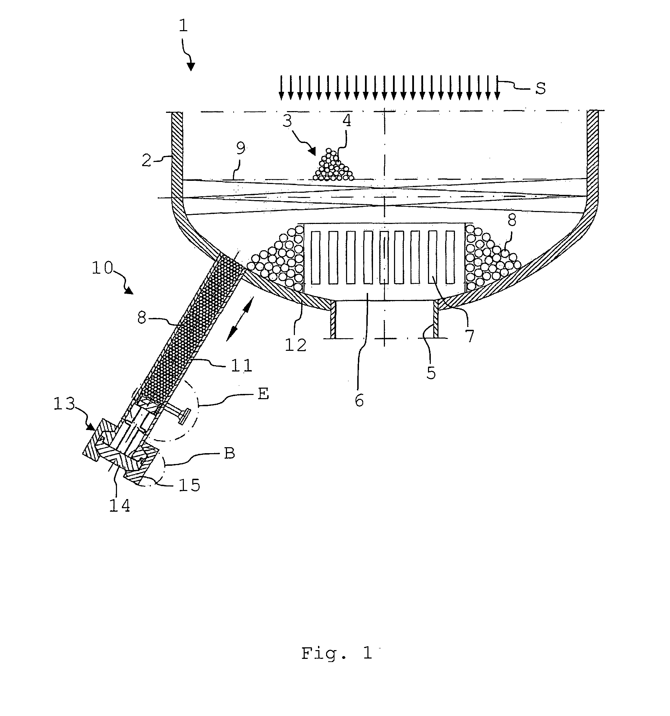

Die Fig. 1 zeigt eine schematische Teilschnittansicht eines Reaktors 1 einer verfahrenstechnischen Anlage zur Wasserstoffherstellung. Insbesondere ist die Anlage zur sogenannten partiellen Oxidation eines Rohstoffs geeignet. Bei der partiellen Oxidation wird ein Rohstoff, wie Erdgas oder ein schwerer Kohlenwasserstoff, beispielsweise Heizöl, unter Sauerstoffmangel in einem exothermen Prozess umgesetzt. Hauptreaktionsprodukte sind dabei Wasserstoff und Kohlenstoffmonoxid. Um unerwünschte Begleitstoffe wie Schwefelwasserstoff, Nickel oder Schwefel aus einem durch den Reaktor 1 strömenden Synthesegas S zu entfernen, umfasst der Reaktor 1 einen in einem Reaktorbehälter 2 des Reaktors 1 vorgesehenen Katalysator 3. Der Katalysator 3 ist vorzugsweise als Schüttgut in den Reaktorbehälter 2 eingebracht und kann eine Vielzahl kugelförmiger Katalysatorelemente 4 mit einem Durchmesser von 2 bis 5 mm aufweisen.

Der Reaktorbehälter 2 kann beispielsweise aus einem Stahlwerkstoff gefertigt sein. Das Synthesegas S wird in den Reaktorbehälter 2 eingeleitet, durchströmt den Katalysator 3 und wird an einem Auslass 5 des Reaktorbehälters 2 wieder aus diesem herausgeleitet. An dem Auslass 5 kann ein entfernbarer Gaskollektor 6 vorgesehen sein. Der Gaskollektor 6 kann Schlitze 7 aufweisen, durch die das Synthesegas S in den Gaskollektor 6 einströmt. Der Gaskollektor 6 ist von kugelförmigen Stützelementen 8 umgeben, die als Schüttgut in den Reaktorbehälter 2 eingebracht sind. Die Stützelemente 8 sind beispielsweise Aluminium- oder Keramikkugeln. Die Stützelemente 8 weisen einen größeren Durchmesser auf als die Katalysatorelemente 4. Die Stützelemente 8 sind inert, das heißt, sie reagieren chemisch nicht mit dem Synthesegas S. Der Durchmesser der Stützelemente 8 ist so groß, dass die Stützelemente 8 nicht in die Schlitze 7 des Gaskollektors 6 fallen können. Die Stützelemente 8 sind unterhalb der Katalysatorelemente 4 des Katalysators 3 angeordnet und stützen diesen somit ab. Zwischen den Stützelementen 8 und den Katalysatorelementen 4 kann ein optionales Drahtnetz 9 positioniert sein. Der Reaktorbehälter 2 ist bis zu dem Drahtnetz 9 mit den Stützelementen 8 aufgefüllt.

Der Reaktor 1 umfasst ferner eine Anordnung 10 zum Austauschen des Katalysators 3. Die Anordnung 10 umfasst einen an dem Reaktorbehälter 2 vorgesehenen rohrförmigen Flanschabschnitt 11. Der Flanschabschnitt 11 ist beispielsweise mit dem Reaktorbehälter 2 verschweißt. Insbesondere ist der Flanschabschnitt 11 seitlich an einem Boden 12 des Reaktorbehälters 2 vorgesehen. Der Boden 12 kann sphärisch gewölbt sein. An dem Boden 12 ist auch der Auslass 5 vorgesehen. Der Flanschabschnitt 11 kann mit Stützelementen 8 aufgefüllt sein. Die im Flanschabschnitt 11 angeordneten Stützelemente 8 können einen kleineren Durchmesser aufweisen als die in dem Reaktorbehälter 2 angeordneten Stützelemente 8. An dem Flanschabschnitt 11 ist eine Verschlusseinrichtung 13 zum Verschließen eines dem Reaktorbehälter 2 abgewandten Endabschnitts des Flanschabschnitts 11 vorgesehen. Die Verschlusseinrichtung 13 umfasst einen stirnseitig an dem Flanschabschnitt 11 vorgesehenen Deckel 14 und eine Befestigungseinrichtung 15, die dazu eingerichtet ist, den Deckel 14 axial gegen den Flanschabschnitt 11 zu drücken.

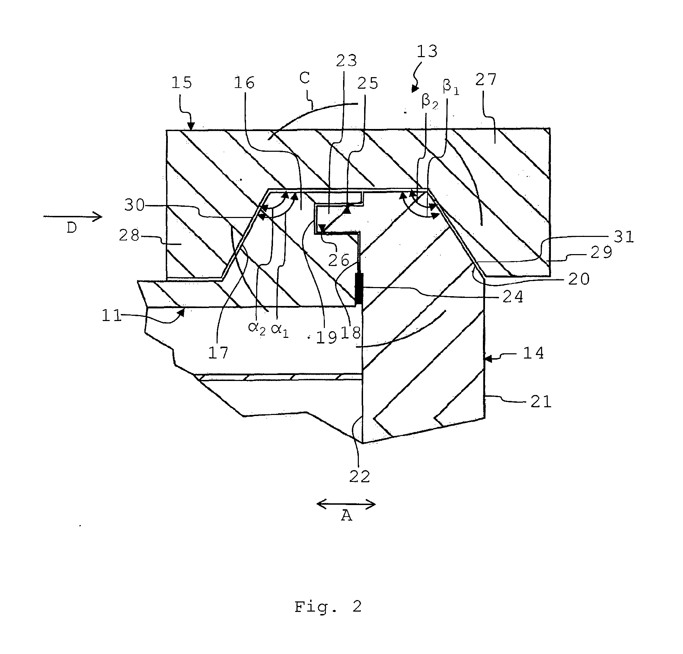

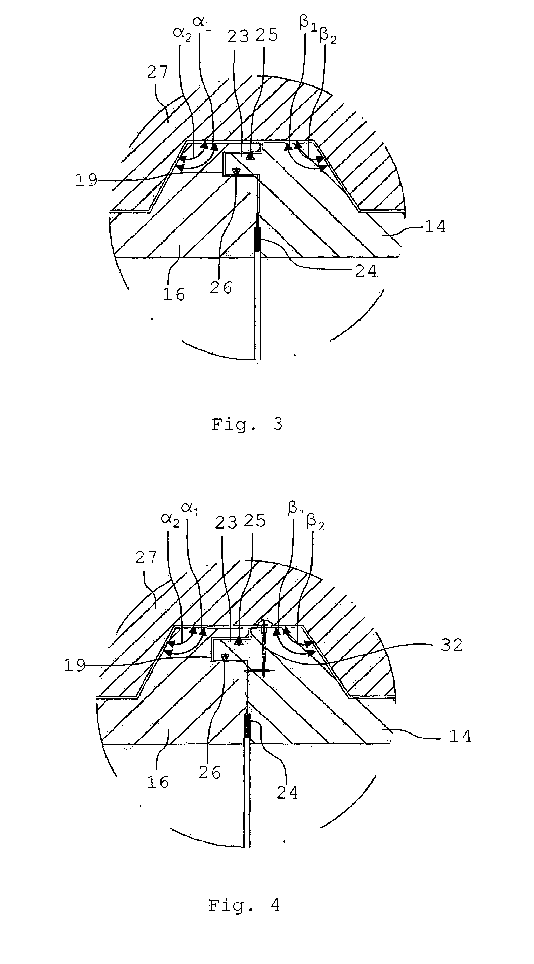

Die Fig. 2 zeigt die Detailansicht B gemäß der Fig. 1. Die Fig. 3 zeigt die Detailansicht C gemäß der Fig. 2. Die Fig. 2 zeigt eine schematisch vergrößerte Schnittansicht der Verschlusseinrichtung 13. Die Fig. 3 zeigt eine nochmals vergrößerte Schnittansicht der Verschlusseinrichtung 13. Im Folgenden wird auf die Fig. 2 und 3 gleichzeitig Bezug genommen.

Der Flanschabschnitt 11 weist einen ringförmig umlaufenden Endabschnitt 16 auf, der eine umlaufende geneigte Dichtfläche 17 umfasst. Die Dichtfläche 17 ist gegenüber einer zylindrischen Außenfläche des Endabschnitts 16 um einen Winkel α₁ geneigt. Der Winkel α₁ beträgt beispielsweise 100 bis 150°. An einer Stirnfläche 18 des Endabschnitts 16 ist eine vollständig um den Flanschabschnitt 11 umlaufende im Querschnitt rechteckförmige Nut 19 vorgesehen. Der Deckel 14 umfasst, wie der Endabschnitt 16 des Flanschabschnitts 11, eine umlaufende geneigte Dichtfläche 20. Die Dichtfläche 20 ist gegenüber einer zylindrischen Außenfläche des Deckels 14 um einen Winkel β₁ geneigt. Der Winkel β₁ kann beispielsweise 100 bis 150° betragen.

Der Deckel 14 weist eine dem Flanschabschnitt 11 abgewandte Rückseite 21 und eine dem Flanschabschnitt 11 zugewandte Vorderseite 22 auf. An der Vorderseite 22 ist eine ringförmige umlaufende Rippe 23 vorgesehen, die dazu eingerichtet ist, in die Nut 19 des Endabschnitts 16 des Flanschabschnitts 11 einzugreifen. Die Rippe 23 weist im Querschnitt eine rechteckförmige Geometrie auf. Zwischen der Stirnfläche 18 des Endabschnitts 16 und der Vorderseite 22 des Deckels 14 ist ein Dichtelement 24 angeordnet. Das Dichtelement 24 kann beispielsweise aus Edelstahl oder Graphit gefertigt sein. Weiterhin sind an der Rippe 23 ein Dichtelement 25 und ein Dichtelement 26 vorgesehen. Die Dichtelemente 25, 26 sind vorzugsweise Rundringdichtungen.

Die Befestigungseinrichtung 15 umläuft den Endabschnitt 16 und den Deckel 14 und presst diese in eine Axialrichtung A des Flanschabschnitts 11 aufeinander. Die Befestigungseinrichtung 15 ist umfänglich in zwei halbkreisförmige Segmente 27 aufgeteilt. Die Segmente 27 sind im Querschnitt C-förmig. Jedes Segment 27 ist dazu eingerichtet, gleichzeitig den Deckel 14 und den Endabschnitt 16 umfänglich formschlüssig zu umgreifen. Hierzu weist jedes Segment 27 zwei Seitenabschnitte 28, 29 auf. Jedem Seitenabschnitt 28, 29 ist eine Dichtfläche 30, 31 zugeordnet. Die Dichtfläche 30 ist dabei in einem Winkel α₂ gegenüber einer zylindrischen Innenfläche des Segments 27 geneigt. Die Dichtfläche 31 ist in einem Winkel β₂ gegenüber der zylindrischen Innenfläche des Segments 27 geneigt. Dabei kann α₁ gleich α₂ und β₁ gleich β₂ sowie α₁ gleich α₂ gleich β₁ gleich β₂ sein. Die Dichtflächen 30, 31 sind dabei so weit voneinander beabstandet, dass beim seitlichen Aufschieben des Segments 27 auf den Endabschnitt 16 und den Deckel 14 die Dichtflächen 30, 31 auf den Dichtflächen 17, 20 abgleiten und die Vorderseite 22 des Deckels 14 in Axialrichtung A gegen die Stirnfläche 18 des Endabschnitts 16 drücken.

Die Fig. 4 zeigt eine Weiterbildung der Verschlusseinrichtung 13, bei der in dem Deckel 14 eine Bohrung 32 vorgesehen ist, die einen Bereich zwischen dem Dichtelement 26 und dem Dichtelement 24 in die Umgebung entlüftet. An der Bohrung 32 kann ein Drucksensor angeschlossen werden. Der Drucksensor kann einen Druckabfall oder Druckanstieg in dem Bereich zwischen dem Dichtelement 26 und dem Dichtelement 24 erfassen. Hierdurch kann mit Hilfe des Drucksensors eine Beschädigung des Dichtelements 24 ermittelt werden.

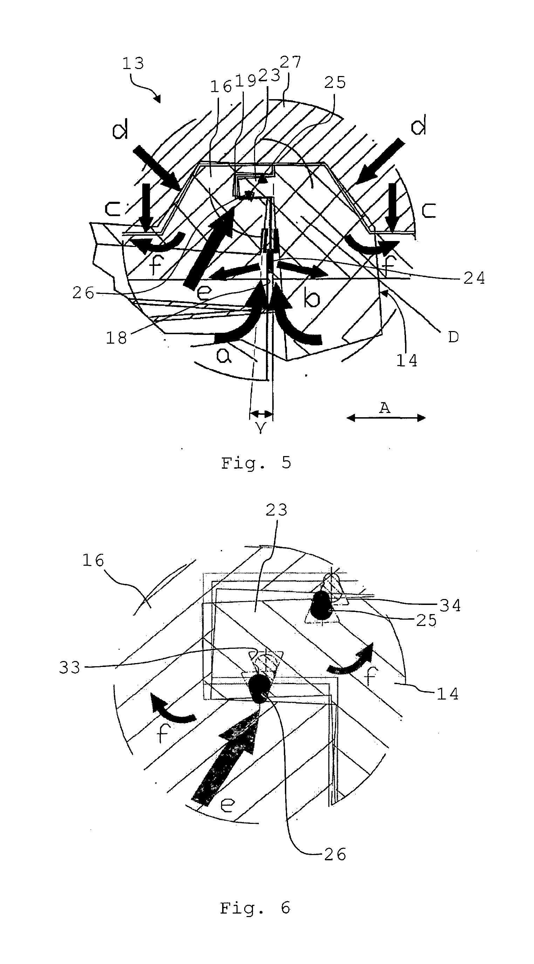

Die Fig. 5 zeigt eine Schnittansicht der Verschlusseinrichtung 13 im Betrieb des Reaktors 1. In der Fig. 5 ist mit a der Innendruck in dem Flanschabschnitt 11 gekennzeichnet. Aufgrund des Innendrucks a verformen sich der Deckel 14 und der Endabschnitt 16 so, dass sich die Rippe 23 in der Nut 19 verspannt. Hierdurch erhöht sich die Dichtwirkung. Mit b ist in der Fig. 5 eine aus dem Innendruck a resultierende Verformung des Deckels 14 und des Endabschnitts 16 gekennzeichnet. Mit einem Anpressdruck c drücken die Segmente 27 beim Montieren der Verschlusseinrichtung 13 gegen den Deckel 14 und den Endabschnitt 16. Während dem Betrieb des Reaktors 1 drücken die Segmente 27 mit einem Anpressdruck d gegen den Deckel 14 und den Endabschnitt 16. Mit dem Bezugszeichen e ist die Verformung der Rippe 23 gekennzeichnet. Der Deckel 14 und der Endabschnitt 16 führen aufgrund ihrer Verformung eine Mikrobewegung f durch, aufgrund der die Rippe 23 sich in der Nut 19 verspannt. Die Stirnfläche 18 und die Vorderseite 22 können im Betrieb des Reaktors 1 um einen Winkel γ zueinander geneigt sein.

Die Fig. 6 zeigt eine vergrößerte Schnittansicht der Rippe 23. Hierbei sind die Dichteinrichtungen 25, 26 die als Rundringdichtungen ausgeführt sind, in Schwalbenschwanznuten 33, 34 angeordnet. Die Fig. 6 zeigt weiterhin in gestrichelter Darstellung die Verformung des Deckels 14 und des Endabschnitts 16.

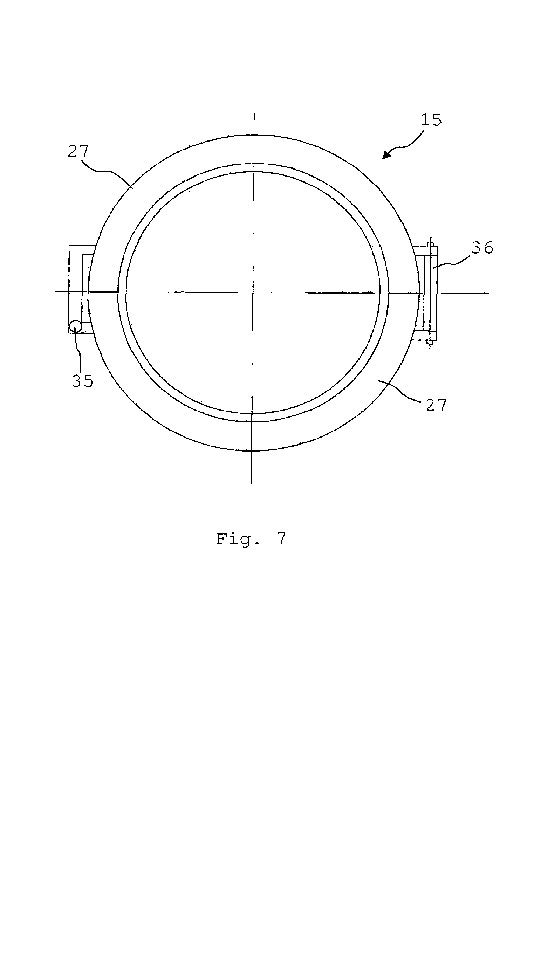

Die Fig. 7 zeigt die Ansicht D gemäß der Fig. 2. Hierbei ist die Befestigungseinrichtung 15 beispielsweise in zwei Segmente 27, insbesondere Halbschalen, aufgeteilt, die an einem Gelenk 35 verschwenkbar miteinander verbunden sind. Dem Gelenk 35 gegenüberliegend ist ein Verbindungsmittel 36 vorgesehen, beispielsweise eine Schraube, mit dem die Segmente 27 miteinander verspannbar sind.

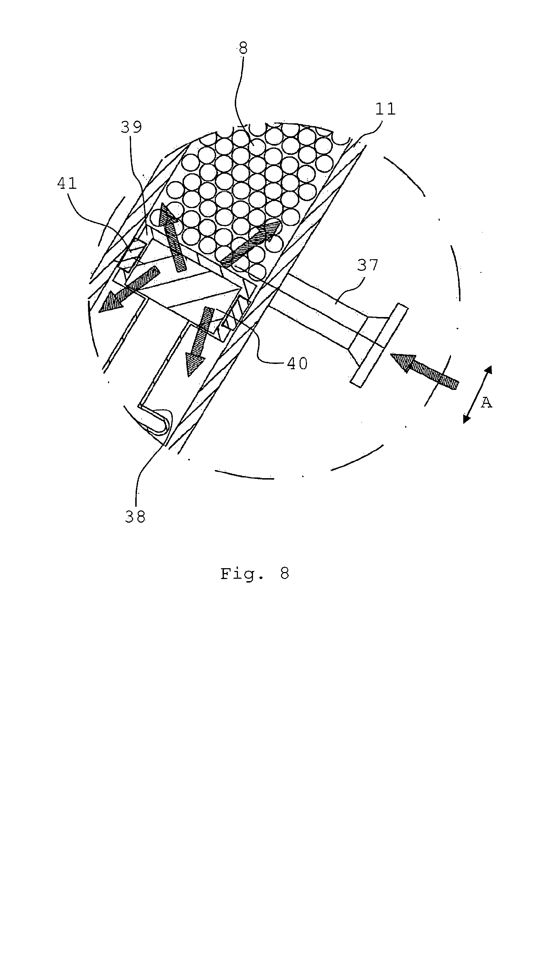

Die Fig. 8 zeigt eine weitere Ansicht gemäß der Detailansicht E der Fig. 1. Hierbei ist an dem Flanschabschnitt 11 ein Rohr 37 vorgesehen, durch das ein Schutzgas, wie Stickstoff, in den Flanschabschnitt 11 eingeleitet werden kann. Hierdurch kann der Flanschabschnitt 11 auch mit einem Überdruck beaufschlagt werden. Der Deckel 14 umfasst weiterhin ein elastisches Element 38, das zwischen dem Deckel 14 und einem Stopfen 39 angeordnet ist. Das elastische Element 38 kann balgförmig sein. Mit Hilfe des elastischen Elements 38 kann der Stopfen gegenüber den Stützelementen 8 federvorgespannt werden. Der Stopfen 39 kann beispielsweise mit einem Gewebe 40, insbesondere einem Keramikgewebe, gefüllt sein. Das elastische Element 38 ist in der Axialrichtung A komprimierbar. Der Stopfen 39 umfasst weiterhin ein Dichtelement 41, das beispielsweise als Graphitelement ausgebildet ist.

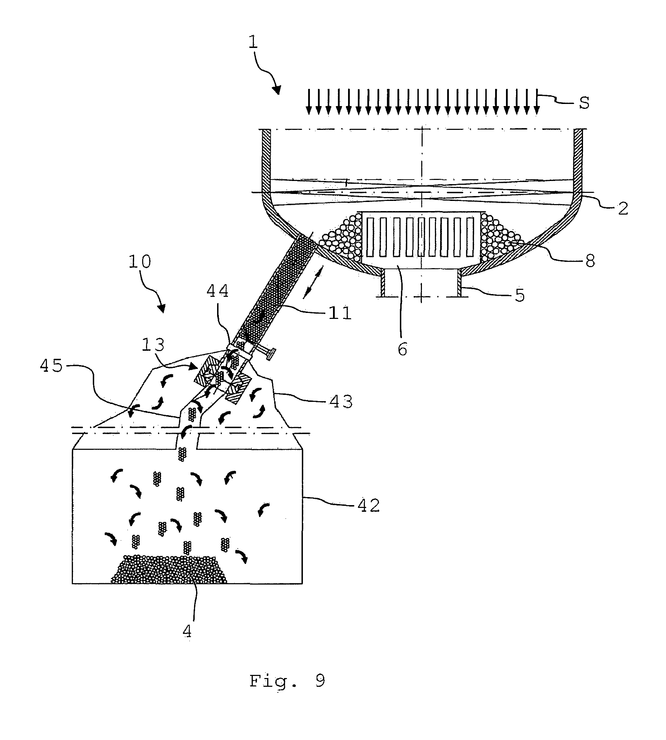

Die Fig. 9 zeigt eine Weiterbildung der Anordnung 10. Hierbei umfasst die Anordnung 10 weiterhin einen Behälter 42, in dem die Katalysatorelemente 4 des Katalysators 3 aufnehmbar sind. Der Behälter 42 ist mit Hilfe einer Schutzhülle 43 mit dem Flanschabschnitt 11 verbunden. Hierzu kann eine ringförmige Fixiereinrichtung 44 zum Fixieren der Schutzhülle 43 an dem Flanschabschnitt 11 vorgesehen sein. Mit Hilfe eines Schlauchs 45 können die Katalysatorelemente 4 in den Behälter 42 geleitet werden. Der Behälter 42 ist vorzugsweise mit einem Schutzgas wie Stickstoff gefüllt.

Obwohl die vorliegende Erfindung anhand von Ausführungsbeispielen beschrieben wurde, ist sie vielfältig modifizierbar.

### Verwendete Bezugszeichen

- 1: Reaktor
- 2: Reaktorbehälter
- 3: Katalysator
- 4: Katalysatorelement
- 5: Auslass
- 6: Gaskollektor
- 7: Schlitz
- 8: Stützelement
- 9: Drahtnetz
- 10: Anordnung
- 11: Flanschabschnitt
- 12: Boden
- 13: Verschlusseinrichtung
- 14: Deckel
- 15: Befestigungseinrichtung
- 16: Endabschnitt
- 17: Dichtfläche
- 18: Stirnfläche
- 19: Nut
- 20: Dichtfläche
- 21: Rückseite
- 22: Vorderseite
- 23: Rippe
- 24: Dichtscheibe
- 25: Dichtelement
- 26: Dichtelement
- 27: Segment
- 28: Seitenabschnitt
- 29: Seitenabschnitt
- 30: Dichtfläche
- 31: Dichtfläche
- 32: Bohrung
- 33: Nut
- 34: Nut
- 35: Gelenk
- 36: Verbindungselement
- 37: Rohr
- 38: Element
- 39: Stopfen
- 40: Gewebe
- 41: Dichtelement
- 42: Behälter
- 43: Schutzhülle
- 44: Fixiereinrichtung
- 45: Schlauch

- a: Innendruck
- A: Axialrichtung
- b: Verformung
- c: Anpressdruck
- d: Anpressdruck
- e: Verformung
- f: Mikrobewegung
- S: Synthesegas
- α₁: Winkel
- α₂: Winkel
- β₁: Winkel
- β₂: Winkel
- γ: Winkel

## Patentansprüche

1. Anordnung (10) zum Austauschen eines in einem Reaktorbehälter (2) eines Reaktors (1) zur Oxidation eines Synthesegases (S) aufgenommenen Katalysators (3), mit einem an dem Reaktorbehälter (2) anordenbaren rohrförmigen Flanschabschnitt (11), durch den der Katalysator (3) aus dem Reaktorbehälter (2) entnehmbar ist, einem Deckel (14) zum Verschließen des Flanschabschnitts (11) und einer Verschlusseinrichtung (13), die gleichzeitig den Deckel (14) und den Flanschabschnitt (11) umfänglich umgreift und die dazu eingerichtet ist, den Deckel (14) in einer Axialrichtung (A) des Flanschabschnitts (11) gegen diesen zu pressen.

2. Anordnung nach Anspruch 1, wobei der Deckel (14) eine umlaufende Rippe (23) umfasst, die dazu eingerichtet ist, formschlüssig in eine an einem Endabschnitt (16) des Flanschabschnitts (11) vorgesehene Nut (19) einzugreifen.

3. Anordnung nach Anspruch 2, wobei zwischen der Rippe (23) und der Nut (19) zumindest ein Dichtelement (25, 26) vorgesehen ist.

4. Anordnung nach Anspruch 3, wobei zwischen einer Stirnfläche (18) des Endabschnitts (16) und einer Vorderseite (22) des Deckels (14) eine Dichtscheibe (24) vorgesehen ist.

5. Anordnung nach Anspruch 4, wobei in dem Deckel (14) eine Bohrung (32) vorgesehen ist, in der ein zwischen dem zumindest einen Dichtelement (25, 26) und der Dichtscheibe (24) herrschender Gasdruck ermittelbar ist.

6. Anordnung nach einem der Ansprüche 1 - 5, wobei die Verschlusseinrichtung (13) umfänglich in mindestens zwei Segmente (27) unterteilt ist, die an einem Gelenk (35) verschwenkbar miteinander verbunden sind.

7. Anordnung nach Anspruch 6, wobei die Segmente (27) mit Hilfe eines Verbindungselements (36) vorspannbar sind.

8. Anordnung nach Anspruch 7, wobei die Segmente (27) schräg positionierte Dichtflächen (30, 31) aufweisen, die dazu eingerichtet sind, beim Vorspannen der Segmente (27) auf einer korrespondierenden Dichtfläche (17) des Endabschnitts (16) und einer korrespondierenden Dichtfläche (20) des Deckels (14) abzugleiten, um den Deckel (14) in der Axialrichtung (A) des Flanschabschnitts (11) gegen diesen zu pressen.

9. Anordnung nach einem der Ansprüche 1 - 8, wobei der Deckel (14) einen Stopfen (39), der in den Flanschabschnitt (11) einführbar ist, und ein elastisches Element (38), insbesondere einen Faltenbalg, aufweist, das zwischen einer Vorderseite (22) des Deckels (14) und dem Stopfen (39) angeordnet ist.

10. Anordnung nach Anspruch 9, wobei der Stopfen (39) mit einem Gewebe (40), insbesondere einem Keramikgewebe, gefüllt ist.

11. Anordnung nach Anspruch 9 oder 10, wobei der Stopfen (39) ein ringförmiges Dichtelement (41) zum umfänglichen Abdichten des Stopfens (39) gegenüber dem Flanschabschnitt (11) aufweist.

12. Anordnung nach einem der Ansprüche 1 - 11, wobei senkrecht zu einer Axialrichtung (A) des Flanschabschnitts (11) an diesem ein Rohr (37) zum Befüllen des Flanschabschnitts (11) mit einem Schutzgas vorgesehen ist.

13. Anordnung nach einem der Ansprüche 1 - 12, ferner umfassend einen Behälter (42) zum Aufnehmen des Katalysators (3), wobei der Behälter (42) an den Flanschabschnitt (11) anschließbar ist.

14. Anordnung nach Anspruch 13, wobei der Behälter (42) mit Hilfe einer gasdichten Schutzhülle (43) mit dem Behälter (42) verbindbar ist.

15. Reaktor (1) zur Oxidation eines Synthesegases (S), mit einem Reaktorbehälter (2), einem in dem Reaktorbehälter (2) aufgenommenen Katalysator (3) und einer Anordnung (10) nach einem der Ansprüche 1 - 14 zum Entnehmen des Katalysators (3) aus dem Reaktorbehälter (2).
